Europäisches Patentamt

European Patent Office

Office européen des brevets

(11) Numéro de publication: **0 143 726 B1**

# FASCICULE DE BREVET EUROPEEN

(45) Date de publication de fascicule du brevet: **27.05.92**

(51) Int. Cl.5: **C01G 43/01**, C01G 43/00, C01G 56/00

(21) Numéro de dépôt: **84420195.4**

(22) Date de dépôt: **22.11.84**

(54) **Procédé de préparation d'oxydes métalliques pulvérulents à partir de solutions aqueuses ou de mélanges solides de nitrates métalliques.**

(30) Priorité: **25.11.83 FR 8319173**

(43) Date de publication de la demande:
**05.06.85 Bulletin 85/23**

(45) Mention de la délivrance du brevet:
**27.05.92 Bulletin 92/22**

(84) Etats contractants désignés:
**AT BE CH DE GB IT LI LU NL SE**

(56) Documents cités:
**FR-A- 2 088 170**
**FR-A- 2 370 695**
**FR-A- 2 526 006**

**CHEMICAL ABSTRACTS, vol. 63, no. 6, 13 septembre 1965, colonne 6635c, Columbus, Ohio, US; J. LOVASI: "Thermal decomposition of uranyl nitrate hydrate" & KOHASZ. LAPOK 97, 45-51, 1964**

**CHEMICAL ABSTRACTS, vol. 50, no. 22, 25 novembre 1956, colonnes 16498-16499, point i, Columbus, Ohio, US; J.R. BRIDGE et al.: "Thermal decomposition of uranyl nitrate**

**hexahydrate" & ATOMIC ENERGY COMM. BMI-1110, 10 pp., 1956**

(73) Titulaire: **COMURHEX Société pour la Conversion de l'Uranium en Métal et Hexafluorure Tour Manhattan La Défense 2 6, place de l'Iris**
**F-92400 Courbevoie(FR)**

(72) Inventeur: **Bachelard, Roland**
**99, Grande rue de la Guillotière**
**F-69007 Lyon(FR)**
Inventeur: **Joubert, Philippe**
**34, avenue de Ménival**
**F-69005 Lyon(FR)**

(74) Mandataire: **Vanlaer, Marcel et al**
**PECHINEY 28, rue de Bonnel**
**F-69433 Lyon Cédex 3(FR)**

EP 0 143 726 B1

**Description**

L'invention concerne un procédé de préparation d'oxydes métalliques pulvérulents de réactivité prédéterminée, réglée par la surface spécifique par traitement thermique des nitrates correspondants, se présentant sous la forme d'une solution aqueuse ou d'un solide comprenant du nitrate d'uranyle seul ou en mélange avec l'un au moins des nitrates de thorium, cerium et plutonium.

Aux fins de la présente invention, par "oxydes métalliques", il convient d'entendre l'oxyde d'uranium $UO_3$ seul, ou bien l'oxyde d'uranium $UO_3$ en mélange avec l'un au moins des oxydes de thorium ($ThO_2$), de cerium ($CeO_2$) ou de plutonium ($PuO_2$).

A travers l'expression "réactivité prédéterminée", la demanderesse entend définir la surface spécifique la plus adéquate qu'il est souhaitable de procurer aux oxydes métalliques pour optimiser leur aptitude à des transformations postérieures à la dénitration, telles que par exemple, la transformation thermique de l'$UO_3$ eu $U_3O_8$, oxydes stables autorisant un stockage même prolongé préalable à sa réduction ultérieure ou bien la réduction directe de l'$UO_3$ en $UO_2$ suivie de l'hydrofluoruration par l'acide fluorhydrique, ou encore la production de poudres d'oxyde d'uranium ou d'oxydes mixtes de qualité céramique pour être transformés en combustibles nucléaires par compactage sous forme de pastilles et frittage.

Dans le cas de la réduction directe du seul $UO_3$ en $UO_2$ suivie de l'hydrofluoruration de l'$UO_2$ en $UF_4$, la réactivité de l'$UO_2$ est corrélativement liée à la surface spécifique et à la porosité de l'$UO_3$ résultant de la dénitration. Il s'avère souhaitable que les aptitudes à la réduction directe de $UO_3$ en $UO_2$ et à l'hydrofluoruration de l'$UO_2$ en $UF_4$ soient réglées à la demande lors de la dénitration du nitrate d'uranyle hydraté par la production d'un oxyde d'uranium $UO_3$ ayant une surface spécifique et une porosité adaptées à chaque technologie.

Dans le cas de la transformation thermique $UO_3$ en $U_3O_8$, en vue de disposer d'un oxyde stable ne se réhydratant pas au cours du stockage précédant la réduction en $UO_2$, cette transformation s'opère avec une forte diminution de la surface spécifique du produit de départ à tel point que pour aboutir à un dioxyde d'uranium ayant une réactivité suffisante, c'est à dire une surface spécifique développée, il est fréquemment nécessaire de transformer l'$U_3O_8$ en diuranate d'ammonium, ultérieurement décomposé en $UO_3$ de grande surface spécifique qui après la réduction donne un dioxyde d'uranium de réactivité suffisante.

Dans le cas de la production de poudres d'oxydes métalliques de qualité céramique, destinées à la réalisation de combustibles nucléaires, les oxydes métalliques tels que le dioxyde d'uranium ($UO_2$) seul ou en mélange avec l'un au moins des oxydes de thorium ($ThO_2$), de cerium ($CeO_2$) et de plutonium ($PuO_2$), il est bien connu que le frittage de telles poudres dans une atmosphère réductrice permet d'obtenir des pastilles de densité élevée, à la condition de s'adresser à des poudres de grande surface spécifique, et de pratiquer pour chaque valeur de surface spécifique un protocole de frittage optimal (traité de chimie minérale de Paul PASCAL, tome XV, pages 300 à 304, édition 1961).

En général, les combustibles nucléaires mixtes sont préparés par une précipitation conjointe par exemple par hydrolyse de solutions mixtes de nitrates de métaux lourds et décomposition thermique, mais selon une variante, ils peuvent être produits par mélange d'oxydes appropriés, chaque oxyde étant préalablement obtenu isolément par précipitation et décomposition thermique.

Actuellement, les seuls procédés connus d'obtention de $UO_2$ seul ou en mélange avec l'un au moins des oxydes de thorium, cerium et plutonium conduisent en ce qui concerne l'uranium à des produits intermédiaires consistants en $UO_3$ ou en un mélange de $UO_3$ et $U_3O_8$ dont la surface spécifique est ou bien très faible, ne dépassant que rarement le mètre carré par gramme, ou bien très forte, par exemple de l'ordre de 10 à 30 $m^2.g^{-1}$. Parfois, ces procédés passent par des adjuventations chimiques qui permettent d'approcher la surface spécifique souhaitée par l'utilisateur, par exemple comprise entre 1 et 15 $m2\ g^{-1}$. Mais une telle adjuventation est une source d'inconvénients majeurs se manifestant par une augmentation des coûts, une complication des procédés et surtout des nuisances pour l'environnement.

Dans le cas où l'on pratique la production de trioxyde d'uranium ($UO_3$) par dénitration thermique du nitrate d'uranyle hydraté selon la réaction

$$UO_2(NO_3)_2,6H_2O \rightarrow UO_3 + 2NO_2 + O_2 + 6H_2O$$

il est notoire que l'$UO_3$ obtenu présente en général une faible surface spécifique.

De nombreux procédés d'obtention du trioxyde d'uranium par dénitration ont déjà été décrits dans la littérature spécialisée. C'est ainsi que le document "Uranium Production Technology" édité par Charles D. Harrington and Archie E. Ruehle, New-York, édition 1959, pages 181 à 191, cite plusieurs procédés de dénitration thermique de nitrate d'uranyle hexahydraté.

Un premier procédé, de type discontinu, consiste à traiter thermiquement une solution concentrée de

2

EP 0 143 726 B1

nitrate d'uranyle hexahydraté maintenue sous agitation, d'abord à une température contrôlée de 621° C des gaz de combustion pendant une heure et demie, puis à une température de 510 ° C de ces gaz pendant cinq heures et, enfin, à refroidir le produit pulvérulent obtenu pendant une demi-heure environ. Toutefois, comme l'auteur l'exprime lui-même, ce procédé présente cer

tains inconvénients qui en limitent son développement. En effet, le produit pulvérulent obtenu est, en fait, constitué par un mélange de $UO_3$ et de $U_3O_8$, ce deuxième oxyde se formant sur les parois du réacteur portées à une température plus élevée que celle qui règne à l'intérieur dudit réacteur. De plus, si la température de dénitration est trop forte, elle peut conduire à la prise en masse du mélange d'oxydes précités, tandis que, si la température de dénitration est trop faible, le mélange d'oxydes contient encore du nitrate d'uranyle et de l'eau. Enfin, dans le cas le plus favourable, c'est à dire dans le cas où le produit pulvérulent obtenu est de l'$UO_3$, ultérieurement réduit en $UO_2$, ce dernier offre une faible réactivité à l'égard de l'acide fluorhydrique, considéré par l'auteur lui-même comme la conséquence de la faible surface spécifique du trioxyde d'uranium obtenu (0,73 $m^2/g$)

Pour améliorer cette réactivité du dioxyde d'uranium, l'auteur préconise d'utiliser certains artifices tels que, par exemple, l'introduction d'acide sulfurique dans la solution de nitrate d'uranyle soumise à la dénitration thermique. Mais, ces artifices se révèlent d'une efficacité limitée puisque l'$UO_3$ produit présente une surface spécifique ne dépassent pas 2 $m^2. g^{-1}$.

Un autre procédé, de type connu, consiste à décomposer thermiquement le nitrate d'uranyle hexahydraté par introduction d'une solution aqueuse le contenant dans un lit de trioxyde d'uranium pulvérulent maintenu à la température de dénitration et soumis à agitation. La décomposition thermique du nitrate d'uranyle en solution s'effectue dans un réacteur à auge, dont le fond est chauffé électriquement par contact direct entre la solution de nitrate d'uranyle et l'$UO_3$ pulvérulent chaud remplissant l'auge dudit réacteur, la température du milieu de dénitration étant maintenue entre 510° C et 538° C. Pour permettre le maintien sous agitation du lit de pulvérulent, le réacteur de dénitration est muni d'un agitateur à axe horizontal dont les bras, en forme de T, entretiennent le brassage dudit lit. Au fur et à mesure de sa formation, l'$UO_3$ est extrait du réacteur, tandis que les effluents gazeux sont captés et traités.

Bien que ce procédé offre l'avantage d'être de type connu, il présente des inconvénients similaires à ceux évoqués dans le cas du procédé discontinu précité de dénitration du nitrate d'uranyle hexahydraté. En effet, le produit pulvérulent obtenu peut être un mélange de $UO_3$ et $U_3O_8$ car ce deuxième oxyde peut se former sur les parois surchauffées du réacteur. De plus, si la température de dénitration n'est pas correctement maitrisée, elle peut provoquer la prise en masse du mélange d'oxydes d'uranium si elle est trop élevée, ou encore, donner un mélange d'oxydes d'uranium contenant encore du nitrate d'uranyle et de l'eau, si elle est trop faible. Enfin, après que le produit pulvérulent obtenu selon ce procédé ait été réduit en dioxyde d'uranium, ce dernier offre également une faible réactivité à l'égard de l'acide fluorhydrique dans l'étape de fluoruration ultérieure, comme a pu le constater l'homme de l'art, faible réactivité liée à la faible surface spécifique (inférieure à 1 $m^2.g^{-1}$).

Il est également connu d'effectuer la dénitration thermique du nitrate d'uranyle hexahydraté en lit fluidisé. Un tel procédé est décrit dans la publication "The thermal denitration of uranyl nitrate in a fluidised bed reactor" de l'Australian Atomic Energy Commission, Juillet 1974 (ISBN 0-642-00645-8), pages 1 à 18. Ce procédé consisté à pulvériser une solution concentrée de nitrate d'uranyle dans un lit fluidisé (au moyen d'air ou de vapeur d'eau) de trioxyde d'uranium maintenu approximativement à la température de 270° C. L'$UO_3$ produit par la dénitration thermique se développe sur les particules granuleuses d'$UO_3$ initialement présentes dans le lit fluidisé, ou encore forme de nouvelles particules granuleuses, mises à leur tour en état de fluidisation. Mais, le trioxyde d'uranium produit selon ce procédé, puis soumis à une réduction, conduit à un dioxyde d'uranium qui manifeste une faible réactivité lors de l'étape ultérieure de fluoruration. Cette faible réactivité apparaît être, encore une fois, la conséquence de la faible surface spécifique de l'$UO_3$ produit lors de la dénitration thermique, cette surface restant inférieure au $m^2.g^{-1}$.

Dès lors, pour augmenter la réactivité de l'$UO_3$ produit par la dénitration thermique du nitrate d'uranyle en lit fluidisé, les auteurs du procédé préconisent également l'introduction d'ions sulfates dans la solution de nitrate d'uranyle à traiter, comme la littérature spécialisée l'avait déjà recommandée, mais les résultats énoncés montrent que, dans ce cas, la surface spécifique BET de l'$UO_3$ produit ne peut dépasser 1.5 $m^2.g^{-1}$.

Ainsi tous les procédés connus et décrits dans la littérature spécialisée, pour la production de trioxyde d'uranium par dénitration thermique de nitrate d'uranyle, conduisent à l'obtention d'$UO_3$ de faible surface spécifique ne dépassant pas 2 $m^2 . g^{-1}$, qui par réduction, procure un dioxyde d'uranium révélant une réactivité médiocre dans l'étape ultérieure de fluoruration.

Mais en dépit de cette faible réactivité, ce procédé connaît un développement industriel normal, car la dénitration thermique reste un procédé simple conduisant à l'obtention de $UO_3$ en dehors de toute

3

production d'effluents genants pour l'environnement.

Dans le cas où il est souhaitable de disposer d'un dioxyde d'uranium de forte réactivité à l'égard de l'acide fluorhydrique, ou encore d'une bonne aptitude au frittage, il est connu de pratiquer le traitement de la solution aqueuse de nitrate d'uranyle au moyen d'ammoniaque dans le but de précipiter le diuranate d'ammonium qui est par la suite thermiquement décomposé en $UO_3$ de grande surface spécifique pouvant varier entre 10 et 30 $m^2 g^{-1}$.

Mais un tel procédé aussi interessant soit-il présente les inconvénients de consommer de l'acide nitrique et de l'ammoniaque et de produire également des effluents liquides de nitrate d'ammonium d'utilisation peu facile.

Entre ces deux types de procédés conduisant pour l'un à l'obtention d'un trioxyde d'uranium de faible surface spécifique et par là même de faible réactivité, et pour l'autre un trioxyde d'uranium de surface spécifique élevée mais au prix de l'apparition de nuisances pour l'environnement, il a été proposé un procédé de dénitration thermique par ajout de nitrate d'ammonium en grande quantité audit nitrate métallique.

C'est ainsi que le brevet belge N° 891 819 décrit un procédé de convertion par décomposition thermique de nitrates métalliques concentrés pour la production de poudres d'oxydes métalliques se prêtant à la densification par frittage, ce procédé consistant en la décomposition thermique entre 300° C et 800° C de mélanges de nitrates de métaux lourds et de nitrate d'ammonium.

Bien que l'addition de nitrate d'ammonium conduise à la formation de poudres céramiques de bonne qualité, sans passer par une précipitation, un tel procédé présente les inconvénients majeurs d'une part de consommer de grandes quantités d'ammoniaque et d'autre part de provoquer une forte augmentation des volumes des effluents gazeux à retraiter, l'intérêt d'un tel procédé étant dès lors très fortement amenuisé, et ce d'autant plus, en raison des risques inhérent à la décomposition thermique du nitrate d'ammonium.

Ainsi, la demanderesse a déjà mis au point, dans la demande de brevet EP-A-0 126 746 (publiée postérieurement à la date de priorité, valant date de dépôt, de la présente demande), un procédé d'obtention de trioxyde d'uranium de grande surface spécifique par dénitration thermique directe de nitrate d'uranyle solide par chauffage progressif sous une pression partielle de vapeur d'eau inférieure à 8,7 kPa (65 mm de Hg) tout en maintenant la température de chauffage inférieure à la température de fusion du produit.

On connaît de plus, par le document US-A- 3 355 393, un procédé d'obtention de particules sphériques à base d'oxyde d'uranium, par chauffage sous pression réduite de particules solides sphériques à base de nitrate d'uranyle, la température de chauffage étant toujours inférieure au point de fusion du produit en cours de traitement et ledit chauffage étant réalisé d'abord par paliers de température pour enlever les différentes molécules d'eau, puis par élévation de la température pour effectuer la dénitration.

La demanderesse a également mis au point, dans la demande de brevet FR-A-2 526 006, un procédé d'obtention de trioxyde d'uranium de grande surface spécifique (réactivité élevée) par dénitration thermique directe (c'est-à-dire sans emploi d'adjuvant tel que $NH_4NO_3$ ou autre) de nitrate d'uranyle liquide à l'aide d'un régime de chauffage particulier en deux étapes : une première étape jusqu'à 260° C pour obtenir un produit solide intermédiaire contenant au moins 55% d'uranium, et une deuxième étape jusqu'à au plus 600° C à une vitesse d'au plus 1000° C/h pour obtenir $UO_3$ à surface spécifique élevée. Ce procédé permet d'obtenir un oxyde d'uranium dont la surface spécifique est réglable par le choix et le contrôle de la vitesse de montée en température de la deuxième étape.

En poursuivant ses études, la demanderesse a alors cherché à obtenir par une autre méthode des poudres d'oxydes mixtes ayant une réactivité intermédiaire prédéterminée, correspondant à des surfaces spécifiques ayant une valeur réglée à la demande. Ces surfaces spécifiques peuvent être aisément choisie entre 0,1 $m^2 g^{-1}$ et 100 $m^2.g^{-1}$ sans intervention d'agents chimiques auxiliaires.

L'invention concerne un procédé de préparation d'oxydes métalliques pulvérulents de réactivité prédéterminée, réglée par la surface spécifique et fixée en fonction de la demande, par traitement thermique en deux étapes des nitrates correspondants se présentant sous la forme d'une solution aqueuse ou d'un solide comprenant du nitrate d'uranyle hydraté seul ou en mélange avec l'un au moins des nitrates de thorium, cérium et plutonium, dans lequel la première étape consiste à déshydrater incomplètement ce nitrate d'uranyle hydraté jusqu'à l'obtention d'un produit intermédiaire solide ayant une teneur résiduaire en eau d'au plus 10% en poids du composé d'uranium et un taux de dénitration dudit composé d'uranium d'au plus 50%, et qui est caractérisé en ce que la deuxième étape consiste principalement à décomposer le produit obtenu à l'issue de la première étape par calcination sous pression de vapeur d'eau contrôlée et définie en fonction de la surface spécifique prédéterminée désirée, par une injection de vapeur d'eau.

L'invention poursuit le but de procurer un procédé de décomposition thermique de métaux lourds, sous forme solide ou d'une solution aqueuse, en vue de la production directe de poudres de qualité céramique, disposant d'une surface spécifique précise et réglée, ces poudres se prêtant facilement à une conversion en pastille de combustible nucléaire contenant des oxydes métalliques en mélange.

Elle a aussi pour but de procurer de l'UO$_3$ à surface spécifique adaptée à la demande, aussi bien dans les procédés de production de l'hexafluorure d'uranium comportant la réduction de trioxyde d'uranium en dioxyde d'uranium, la fluoruration du dioxyde d'uranium par l'acide fluorhydrique et enfin, l'action du fluor sur le tétrafluorure d'uranium conduisant à l'hexafluorure d'uranium souhaité, que dans les procédés de production de poudres de dioxyde d'uranium de qualité céramique destinées à la réalisation de combustible nucléaire.

Elle a, de plus pour but de procurer un procédé conduisant à la production d'une poudre d'oxydes métalliques ayant une surface spécifique choisie entre 0,1 m$^2$. g$^{-1}$ et 100 m$^2$. g$^{-1}$.

Elle a, en outre pour but de fournir un procédé donnant des pastilles céramiques à haute résistance mécanique dans lesquelles la distribution des oxydes métalliques est uniforme.

Elle a, enfin pour but de procurer un procédé applicable aux produits d'une usine de retraitement de combustible nucléaire pour la production de pastilles de combustibles mixtes.

Sous l'appellation "nitrates métalliques", la demanderesse entend désigner le nitrate d'uranyle seul ou en mélange avec l'un au moins des nitrates de thorium, cérium et plutonium. Dès lors que la dénitration conduit à l'obtention d'oxydes métalliques, il convient d'entendre, comme cela a déjà été précisé, ou bien le trioxyde d'uranium seul, ou bien le trioxyde d'uranium en mélange avec l'un au moins des oxydes de thorium (ThO$_2$) cérium (CeO$_2$) et plutonium (PuO$_2$).

De plus, la surface spécifique de la poudre d'oxydes métalliques résultant de la dénitration thermique, détermine la réactivité de cette poudre à l'égard des transformations physiques ou chimiques ultérieures.

Mais, comme la dénitration thermique des nitrates de thorium, cérium et plutonium conduit aux formes stables des oxydes correspondants, alors que la dénitration thermique du nitrate d'uranyle conduit à la forme instable UO$_3$, la réactivité de l'UO$_3$ seul ou en mélange dépend essentiellement de la surface spécifique du seul UO$_3$.

Dès lors le procédé selon l'invention se propose de maîtriser la surface spécifique du seul UO$_3$ et par là même, la réactivité des poudres contenant de l'UO$_3$ seul ou en mélange avec l'un au moins des oxydes de thorium, cérium et plutonium.

Selon le procédé de l'invention, la première étape dite de déshydratation se déroule par chauffage du milieu liquide ou solide à une température maximale comprise en général entre 160°C et 300°C et préférentiellement entre 180°C et 270°C.

Cette déshydratation est souhaitablement conduite jusqu'à l'obtention d'un produit intermédiaire solide ayant une teneur résiduaire en eau d'au plus 10% en poids du composé d'uranium et dont le taux de dénitration dudit composé d'uranium n'excède pas 50%, le produit intermédiaire solide ayant préférentiellement une teneur résiduaire en eau d'au plus 5% en poids du composé d'uranium et dont le taux de dénitration dudit composé d'uranium n'excède pas 30%.

Cette première étape de déshydratation peut être avantageusement conduite sous pression réduite, mais la pratique d'une déshydratation à une pression égale ou supérieure à la pression atmosphérique, c'est-à-dire environ 0,1 MPa (1 bar) n'entame pas la bonne qualité des résultats.

La phase solide obtenue lors de la première étape est ensuite soumise à la deuxième étape du procédé selon l'invention qui consiste en une calcination dudit solide à une température maximale généralement choisie entre 260°C et 600°C et préférentiellement entre 300°C et 550°C.

Cette étape de calcination du solide s'effectue sous une pression contrôlée de vapeur d'eau, qui en général est souhaitablement au plus égale à 0,1 MPa (1 bar).

Dans le cas où l'on souhaite obtenir un produit dénitré disposant d'une surface spécifique au moins égale à 15 m$^2$.g$^{-1}$, la pression contrôlée de vapeur d'eau imposée au cours de la calcination sera maintenue à au plus 10 kPa (75 millimètres de mercure).

Dans le cas où l'on souhaite obtenir un produit dénitré disposant d'une surface spécifique au moins égale à 5 m$^2$.g$^{-1}$, la pression contrôlée de vapeur d'eau au cours de la calcination sera au plus égale à 27 kPa (200 millimètres de mercure).

Lorsque le procédé de l'invention est utilisé pour produire le seul UO$_3$ disposant d'une surface spécifique au plus égale à 5 m$^2$.g$^{-1}$, l'étape de dénitration s'effectue préférentiellement sous une pression contrôlée de vapeur d'eau au moins égale à 15 kPa (110 millimètres de mercure)

Mais quand le procédé selon l'invention est utilisé pour produire de l'UO$_3$ seul disposant d'une surface spécifique comprise entre 5 m$^2$.g$^{-1}$ et 15 m$^2$.g$^{-1}$, l'étape de dénitration s'effectue préférentiellement sous une pression de vapeur d'eau comprise entre 4,7 et 27 kPa (35 et 200 millimètres de mercure).

Cette deuxième étape de calcination peut être conduite sous une pression totale préférentiellement inférieure ou égale à la pression atmosphérique, mais qui peut être également réalisée sous une pression totale supérieure à la pression atmosphérique.

En général, la vapeur d'eau nécessaire dans l'étape de la calcination peut être injectée seule ou éventuellement en présence d'un gaz porteur tel que par exemple de l'air, de l'azote ou du $CO_2$ ou des mélanges de ces gaz.

Chaque étape du procédé selon l'invention peut être réalisée d'une manière continue ou discontinue.

Après réduction de l'$UO_3$ en $UO_2$, par exemple par de l'hydrogène, l'oxyde ainsi réduit possède une très forte réactivité à l'égard de l'acide fluorhydrique utilisé dans l'étape ultérieure de fluoruration et une très bonne aptitude au frittage.

Le procédé selon l'invention est généralement mis en oeuvre dans des réacteurs de type connu, tels que réacteurs à plateaux, fours tubulaires à circulation de produit, lits fixes ou mobiles, fours rotatifs, qui peuvent être utilisés seuls ou associés.

Que le procédé de l'invention soit pratiqué d'une manière continue ou discontinue, les effluents gazeux sont évacués au fur et à mesure de leur formation, puis sont traités par les procédés connus en vue de régénérer $HNO_3$ et de le recycler à l'attaque des concentrés uranifères, ou bien de les réduire catalytiquement d'une manière telle que décrite dans le brevet français 2 370 695, qui consiste à transformer les oxydes d'azote produits en azote et vapeur d'eau, le dégagement de chaleur fourni étant utilisé pour la transformation du nitrate d'uranyle en trioxyde d'uranium.

L'invention sera mieux comprise grâce à l'illustration qui en est faite au moyen des exemples ci-après :

EXAMPLE 1 :

Cet exemple illustre pour une composition du produit solide intermédiaire, acquise dans la première étape, l'influence de la pression de vapeur d'eau sur la surface spécifique du trioxyde d'uranium obtenu dans la deuxième étape par déshydratation incomplète et calcination de nitrate d'uranyle hydraté en appliquantle procédé selon l'invention.

Dans ce but, on a introduit 1186 g d'écailles de nitrate d'uranyle hexahydraté dans un pilote de laboratoire constitué par un réacteur muni d'un plateau d'une surface de 0,1 $m^2$ et d'un moyen d'agitation, chauffé par un fluide caloporteur circulant dans une double enveloppe.

Le réacteur était relié à un dispositif permettant d'abaisser la pression, ce dispositif étant lui-même muni d'une régulation de pression.

Les écailles de nitrate d'uranyle hexahydraté étaient introduites dans ledit réacteur préchauffé à 50° C. Puis après avoir abaissé la pression à 3,3 kPa (25 millimètres de mercure), la température était progressivement portée à 270°C en 50 minutes. Elle était ensuite maintenue à cette valeur pendant 50 minutes.

Partant de 1186 g d'écailles, on obtenait 845 g d'un produit intermédiaire partiellement déshydraté présentant les caractéristiques suivantes :

Teneur résiduaire en $H_2O$     1,2 %

Taux de dénitration          25,00%

Puis on a prélevé dans les 845 g du produit intermédiaire obtenu cinq échantillons de 16 g chacun permettant de soumettre selon les essais 1 à 5 ledit produit intermédiaire à l'étape de calcination sous une température donnée mais sous une pression de vapeur d'eau variable et contrôlée pour chacun des essais.

Le temps de calcination proprement dit était maintenu constant pour chaque essai et était de 40 minutes.

La vapeur d'eau présente dans l'enceinte de calcination était produite "in situ" par injection à débit constant d'eau liquide dans un courant d'air à débit également constant, permettant d'obtenir dans ladite enceinte une pression de vapeur d'eau parfaitement définie.

Cinq essais ont été ainsi pratiqués recouvrant un large domaine de pression de vapeur d'eau allant de presque 0 à 21 kPa (0 à 160 millimètres de mercure).

Les conditions de fonctionnement et les caractéristiques des produits obtenue ont été réunies dans le tableau I ci-après :

TABLEAU 1

| N° Essai | | | 1 | 2 | 3 | 4 | 5 |
|---|---|---|---|---|---|---|---|
| Pression totale appliquée en kPa (mm de Hg) (dans la 1ère étape) | | | 3,3 (25) | 3,3 (25) | 3,3 (25) | 3,3 (25) | 3,3 (25) |
| 1ère Etape Déshydratation | | Température maximale de déshydratation en °C | 270 | 270 | 270 | 270 | 270 |
| | | Teneur résiduaire en $H_2O$ du produit intermédiaire en % en poids | 1,2 | 1,2 | 1,2 | 1,2 | 1,2 |
| | | Taux de dénitration du produit intermédiaire en % | 25 | 25 | 25 | 25 | 25 |
| 2ème Etape Calcination | | Pression totale appliquée en MPa (bar) | 0,1 (1) | 0,1 (1) | 0,1 (1) | 0,1 (1) | 0,1 (1) |
| | | Température maximale en °C | 450 | 450 | 450 | 450 | 450 |
| | | Pression contrôlée de vapeur d'eau en kPa (millimètres de mercure) | ~0 | 6,0 (45) | 10,0 (75) | 12,7 (95) | 21,3 (160) |
| $UO_3$ produit Surface spécifique BET en $m^2 g^{-1}$ | | | 20,5 | 17,0 | 11,0 | 8,8 | 4,4 |

Ainsi, on peut constater que, en réglant lors de la première étape les caractéristiques du produit intermédiaire dans les intervalles de compositions préconisées, on obtient, suivant la pression partielle de vapeur d'eau pratiquée dans l'étape de calcination, un trioxyde d'uranium disposant d'une surface spécifique corrélativement liée à la valeur de ladite pression partielle de vapeur d'eau.

EXEMPLE 2 :

Cet exemple illustre la préparation de mélanges d'oxydes de métaux lourds présentant une grande surface spécifique, contenant de l'$UO_3$ et l'un ou l'autre des dioxydes de thorium et de cérium, obtenus par traitement simultané des nitrates métalliques hydratés correspondants.

Pour ce faire on a préparé des mélanges de nitrates des métaux précités, ayant la composition suivante :

ESSAI 6 :     Nitrate d'uranyle hexahydaté seul.

7

ESSAI 7 :  Mélanges de nitrate d'uranyle hexahydraté et de nitrate de thorium tétrahydraté dans les proportions telles que le rapport pondéral U/Th égal à 3.

ESSAI 8 :  Mélanges de nitrate d'uranyle hexahydraté et de nitrate de cérium hexahydraté dans les proportions telles que le rapport pondéral U/Ce égal à 3.

Dans une première étape, les nitrates étaient disposés dans une nacelle sous forme d'une couche de 15 millimètres d'épaisseur. L'enceinte de traitement était soumise à une pression réduite maintenue à 6,7 kPa (25 millimètres de mercure) par l'intermédiaire d'une régulation. Les nitrates étaient chauffés progressivement jusqu'à 250°C en 50 minutes puis maintenus à cette température pendant 40 minutes.

Dans une deuxième étape, l'enceinte de traitement était mise à la pression atmosphérique et balayée par un courant d'air sec de manière à établir une pression de vapeur d'eau autogène toujours inférieure à 4,7 kPa (35 millimètres de mercure).

Puis, les produits intermédiaires étaient portés à la température maximale de 500 °C et maintenus 40 minutes à ce niveau.

A l'issue des deux étapes, on recueillait des poudres formées de $UO_3$ ou des mélanges $UO_3$ - $ThO_2$ - et $UO_3$ - $CeO_2$.

Les conditions de fonctionnement et les caractéristiques des produits obtenus ont été consignées dans le tableau II ci-après :

TABLEAU II

| Essai | | | 6 (U) | 7 (U+Th) | 8 (U+Ce) |
|---|---|---|---|---|---|
| 1ère Etape Déshydratation | | Pression totale appliquée en kPa (mm de Hg) | 3,3 (25) | 3,3 (25) | 3,3 (25) |
| | | Température maximale de déshydratation en °C | 250 | 250 | 250 |
| | | Teneur résiduaire en $H_2O$ du seul composé uranifère intermédiaire en % en poids | 1,3 | | |
| | | Taux de dénitration du produit intermédiaire en % | 20 | | |
| 2ème Etape Calcination | | Pression totale appliquée en MPa (bar) | 0,1 (1) | 0,1 (1) | 0,1 (1) |
| | | Température maximale en °C | 500 | 500 | 500 |
| | | Pression contrôlée de vapeur d'eau en kPa (millimètres de mercure) | <4,7 (35) | <4,7 (35) | <4,7 (35) |
| Surface spécifique BET en $m^2g^{-1}$ | | | 20,2 | 25,6 | 52,8 |

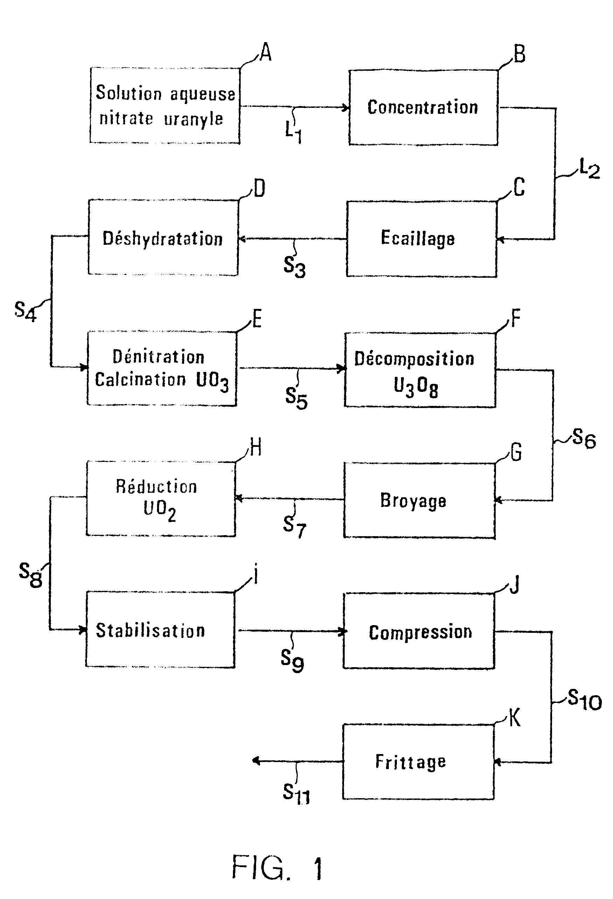

EXEMPLE 3 : (selon la figure)

Cet exemple illustre un enchainement industriel conduisant à la production de pastilles de $UO_2$ à partir d'une solution aqueuse de nitrate d'uranyle.

Dans ce but, on disposait dans une zone de stockage (A) d'une solution aqueuse de nitrate d'uranyle ayant une concentration en uranium de 300 g/l Cette solution était introduite selon $L_1$ dans un évaporateur sous vide (B) en vue de concentrer cette liqueur jusqu'à obtention de nitrate d'uranyle hexahydraté fondu dans son eau de cristallisation.

A la sortie de l'évaporateur (B), le nitrate d'uranyle fondu était coulé selon $L_2$ sur un tambour refroidi (C) assurant la solidification du nitrate d'uranyle hexahydraté sous la forme d'écailles.

Le solide $S_3$ ainsi obtenu était introduit dans un réacteur à plateaux (D) fonctionnant sous une pression réduite de 3,3 kPa (25 millimètres de mercure) et une température progressivement portée de 50°C à 230°C en 45 minutes et maintenue à cette valeur maximale pendant 35 minutes. On a obtenu un produit intermédiaire solide $S_4$ qui contenait 3,6 % en poids d'eau et dont le taux de dénitration était de 12%.

Le produit intermédiaire $S_4$ était ensuite introduit dans un réacteur de dénitration (E) en état de rotation à raison de 50 tours par minute, immergé dans un bain caloporteur à la température de 360° C, réacteur dans lequel régnait une pression déduite de 3,3 kPa (25 millimètres de mercure). Ainsi la dénitration s'effectuait en présence de vapeur d'eau prenant naissance dans le milieu, dont la pression était au plus égale à 3,3 kPa (25 millimètres de mercure). On a obtenu du trioxyde d'uranium dont la surface spécifique (mesurée par la méthode BET) était de 27 $m^2.g^{-1}$.

L'$UO_3$ à grande surface spécifique, représenté par $S_5$, était ensuite décomposé thermiquement à 600°C en $U_3O_8$ dans la zone (F) en présence d'un courant gazeux d'air appauvri, c'est-à-dire dilué par l'azote (13% d'aire, 87% d'azote).

L'oxyde $U_3O_8$ obtenu $S_6$ était soumis à un broyage en (G) dans le but d'obtenir un produit pulvérulent de granulométrie à 100% inférieur à 15 $\mu$m.

Puis, l'oxyde $U_3O_8$ broyé, $S_7$ était réduit en $UO_2$ dans la zone (H) au moyen d'hydrogène pur à 600°C.

L'oxyde $UO_2$ obtenu, $S_8$ était ensuite stabilisé en (I) en lui faisant subir une très légère réoxydation ($UO_2$ transformé en $UO_{2,09}$) par mise en contact avec un mélange gazeux oxydant de type connu à une température de l'ordre de 40°C.

L'oxyde $UP_{2,09}$ stabilisé, $S_9$ qui disposait d'une surface spécifique de 8 $m^2.g^{-1}$ était pastillé en (J). Après compression à 300 MPa (3000 bar), la densité des pastilles était de 5,9.

Les pastilles de $UO_{2,09}$ ($S_{10}$) étaient alors frittées en (K) en les maintenant pendant 4 heures à une température de 1700°C dans un courant d'hydrogène.

Les pastilles frittées $S_{11}$ provenant de la zone (K) de frittage présentaient une densité de 10,7 à l'état fritté.

## Revendications

**1.** Procédé de préparation d'oxydes métalliques pulvérulents de réactivité prédéterminée, réglée par la surface spécifique et fixée en fonction de la demande, par traitement thermique en deux étapes des nitrates correspondants se présentant sous la forme d'une solution aqueuse ou d'un solide comprenant du nitrate d'uranyle hydraté seul ou en mélange avec l'un au moins des nitrates de thorium, cérium et plutonium, dans lequel la première étape consiste à déshydrater incomplètement ce nitrate d'uranyle hydraté jusqu'à l'obtention d'un produit intermédiaire solide ayant une teneur résiduaire en eau d'au plus 10% en poids du composé d'uranium et un taux de dénitration dudit composé d'uranium d'au plus 50%, caractérisé en ce que la deuxième étape consiste principalement à décomposer le produit obtenu à l'issue de la première étape par calcination sous pression de vapeur d'eau contrôlée et définie en fonction de la surface spécifique prédéterminée désirée, par une injection de vapeur d'eau.

**2.** Procédé de préparation d'oxydes métalliques pulvérulents de réactivité prédéterminée et réglée selon la revendication 1, caractérisé en ce que la première étape, dite de déshydratation du nitrate d'uranyle est conduite jusqu'à l'obtention d'un produit intermédiaire solide ayant préférentiellement une teneur résiduaire en eau d'au plus 5% en poids du composé d'uranium et dont le taux de dénitration dudit composé d'uranium n'excède pas 30%.

**3.** Procédé de préparation d'oxydes métalliques pulvérulents de réactivité prédéterminée et réglée selon l'une quelconque des revendications 1 ou 2, caractérisé en ce que l'étape de déshydratation incomplète se déroule à une température maximale généralement comprise entre 160°C et 300°C, et préférentiellement entre 180°C et 270°C.

**4.** Procédé de préparation d'oxydes métalliques pulvérulents de réactivité prédéterminée et réglée selon l'une quelconque des revendications 1 à 3, caractérisé en ce que l'étape de calcination s'effectue à une température maximale généralement comprise entre 260°C et 600°C, et préférentiellement entre 300°C et 550°C.

**5.** Procédé de préparation d'oxydes métalliques pulvérulents de réactivité prédéterminée et réglée selon l'une quelconque des revendications 1 à 4, caractérisé en ce que l'étape de déshydratation est conduite sous pression réduite.

**6.** Procédé de préparation d'oxydes métalliques pulvérulents de réactivité prédéterminée et réglée selon l'une quelconque des revendications 1 à 4, caractérisée en ce que l'étape de déshydratation est conduite sous une pression au moins égale à 0,1 MPa (1 bar).

7. Procédé de préparation d'oxydes métalliques pulvérulents de réactivité prédéterminée et réglée selon l'une quelconque des revendications 1 à 6, caractérisé en ce que l'étape de calcination s'effectue sous une pression contrôlée de vapeur d'eau au plus égale à 0,1 MPa (1 bar).

8. Procédé de préparation d'oxydes métalliques pulvérulents de réactivité prédéterminée et réglée selon l'une quelconque des revendications 1 à 7, caractérisé en ce que l'étape de calcination s'effectue sous une pression contrôlée de vapeur d'eau au plus égale à 10 kPa (75 millimètres de mercure) pour obtenir un produit dénitré de surface spécifique au moins égale à 15 $m^2.g^{-1}$.

9. Procédé de préparation d'oxydes métalliques pulvérulents de réactivité prédéterminée et réglée selon l'une quelconque des revendications 1 à 7, caractérisé en ce que l'étape de calcination s'effectue sous une pression contrôlée de vapeur d'eau au plus égale à 27 kPa (200 millimètres de mercure) pour obtenir un produit dénitré de surface spécifique au moins égale à 5 $m^2.g^{-1}$.

10. Procédé de préparation d'oxydes métalliques pulvérulents de réactivité prédéterminée et réglée selon l'une quelconque des revendications 1 à 7, caractérisé en ce que l'étape de calcination s'effectue préférentiellement sous une pression contrôlée de vapeur d'eau au moins égale à 15 kPa (110 millimètres de mercure) pour obtenir, dans le cas de l'uranium seul, un produit dénitré de surface spécifique au plus égale à 5 $m^2.g^{-1}$.

11. Procédé de préparation d'oxydes métalliques pulvérulents de réactivité prédéterminée et réglée selon l'une quelconque des revendications 1 à 7, caractérisé en ce que l'étape de calcination s'effectue sous une pression contrôlée de vapeur d'eau comprise entre 4,7 et 27 kPa (35 et 200 millimètres de mercure) pour obtenir, dans le cas de l'uranium seul, un produit dénitré de surface spécifique comprise entre 5 $m^2.g^{-1}$ et 15 $m^2.g^{-1}$.

12. Procédé de préparation d'oxydes métallique pulvérulents de réactivité prédéterminée et réglée selon l'une quelconque des revendications 1 à 11, caractérisé en ce que l'étape de calcination est conduite sous une pression totale supérieure à la pression atmosphérique.

13. Procédé de préparation d'oxydes métalliques pulvérulents de réactivité prédéterminée et réglée selon l'une quelconque des revendications 1 à 11, caractérisé en ce que l'étape de calcination est conduite sous une pression totale supérieure à la pression atmosphérique.

**Claims**

1. Process for preparing powdered metal oxides of predetermined reactivity, adjusted by the specific surface area and fixed as a function of the requirement, by two-stage heat treatment of the corresponding nitrates existing in the form of an aqueous solution or of a solid containing hydrated uranyl nitrate alone or mixed with at least one of thorium, cerium and plutonium nitrates, in which the first stage involves incompletely dehydrating this hydrated uranyl nitrate until a solid intermediate product is obtained, having a residual water content of at most 10% by weight of the uranium compound and a degree of denitration of said uranium compound of at most 50%, characterised in that the second stage involves mainly decomposing the product obtained at the outlet of the first stage by calcination under steam pressure, controlled and defined as a function of the desired predetermined specific surface area, by injection of steam.

2. Process for preparing powdered metal oxides of predetermined, adjusted reactivity according to claim 1, characterised in that the first so-called uranyl nitrate dehydration stage is carried out until a solid intermediate product is obtained preferably having a residual water content of at most 5% by weight of the uranium compound and of which the degree of denitration of said uranium compound does not exceed 30%.

3. Process for preparing powdered metal oxides of predetermined, adjusted reactivity according to any one of claims 1 or 2, characterised in that the incomplete dehydration stage takes place at a maximum

EP 0 143 726 B1

temperature which is generally between 160°C and 300°C, and preferably between 180°C and 270°C.

4. Process for preparing powdered metal oxides of predetermined, adjusted reactivity according to any one of claims 1 to 3, characterised in that the calcination stage is carried out at a maximum temperature which is generally between 260°C and 600°C, and preferably between 300 °C and 550°C.

5. Process for preparing powdered metal oxides of predetermined, adjusted reactivity according to any one of claims 1 to 4, characterised in that the dehydration stage is carried out under reduced pressure.

6. Process for preparing powdered metal oxides of predetermined, adjusted reactivity according to any one of claims 1 to 4, characterized in that the dehydration stage is carried out under a pressure of at least 0.1 MPa (1 bar).

7. Process for preparing powdered metal oxides of predetermined, adjusted reactivity according to any one of claims 1 to 6, characterized in that the calcination stage is carried out under a controlled steam pressure of at most 0.1 MPa (1 bar).

8. Process for preparing powdered metal oxides of predetermined, adjusted reactivity according to any one of claims 1 to 7, characterised in that the calcination stage is carried out under a controlled steam pressure of at most 10 kPa (75 millimetres of mercury) to obtain a denitrated product having a specific surface area of at least 15 $m^2.g^{-1}$.

9. Process for preparing powdered metal oxides of predetermined, adjusted reactivity according to any one of claims 1 to 7, characterized in that the calcination stage is carried out under a controlled steam pressure of at most 27 kPa (200 millimetres of mercury) to obtain a denitrated product having a specific surface area of at least 5 $m^2.g^{-1}$.

10. Process for preparing powdered metal oxides of predetermined, adjusted reactivity according to any one of claims 1 to 7, characterised in that the calcination stage is preferably carried out under a controlled steam pressure of at least 15 kPa (110 millimetres of mercury) to obtain, in the case of uranium alone, a denitrated product having a specific surface area of at most 5 $m^2.g^{-1}$.

11. Process for preparing powdered metal oxides of predetermined, adjusted reactivity according to any one of claims 1 to 7, characterised in that the calcination stage is preferably carried out under a controlled steam pressure of between 4.7 and 27 kPa (35 and 200 millimetres of mercury) to obtain, in the case of uranium alone, a denitrated product having a specific surface area of between 5 $m^2.g^{-1}$ and 15 $m^2.g^{-1}$.

12. Process for preparing powdered metal oxides of predetermined, adjusted reactivity according to any one of claims 1 to 11, characterized in that the calcination stage is preferably carried out under a total pressure higher than atmospheric pressure.

13. Process for preparing powdered metal oxides of predetermined, adjusted reactivity according to any one of claims 1 to 11, characterised in that the calcination stage is preferably carried out under a total pressure higher than atmospheric pressure.

## Patentansprüche

1. Verfahren zur Herstellung von feinpulvrigen Metalloxiden mit über die spezifische Oberfläche eingestellter und abhängig von den Anforderungen festgelegter Reaktivität durch thermische Behandlung in zwei Schritten der entsprechenden Nitrate, die in Form einer wäßrigen Lösung oder eines Feststoffs vorliegen, die hydratisiertes Uranylnitrat alleine oder im Gemisch mit mindestens Thoriumnitrat, Cernitrat oder Plutoniumnitrat enthalten, wobei der erste Schritt darin besteht, das hydratisierte Uranylnitrat unvollständig zu dehydratisieren, bis ein festes Zwischenprodukt erhalten wird, das einen Restgehalt an Wasser von maximal 10 Gew.-% der Uraniumverbindung und einen Denitrierungsgrad der Uranverbindung von maximal 50 % besitzt,

**dadurch gekennzeichnet,** daß

12

der zweite Schritt hauptsächlich darin besteht, das im ersten Schritt durch Calcinieren erhaltene Produkt unter kontrolliertem und in Abhängigkeit der festgelegten gewünschten spezifischen Oberfläche bestimmtem Wasserdampfdruck durch Einleiten von Wasserdampf zu zersetzen.

2. Verfahren zur Herstellung von feinpulvrigen Metalloxiden mit festgelegter und eingestellter Reaktivität nach Anspruch 1, dadurch gekennzeichnet, daß der erste Schritt der Dehydratation des Uranylnitrats durchgeführt wird, bis ein festes Zwischenprodukt mit vorzugsweise einem Restwassergehalt von maximal 5 Gew.-% der Uranverbindung erhalten wird und wobei der Denitrierungsgrad der Uranverbindung 30 % nicht überschreitet.

3. Verfahren zur Herstellung von feinpulvrigen Metalloxiden mit festgelegter und eingestellter Reaktivität nach einem der Ansprüche 1 oder 2, dadurch gekennzeichnet, daß der Schritt der unvollständigen Dehydratation bei einer im allgemeinen zwischen 160 °C und 300 °C und vorzugsweise zwischen 180 °C und 270 °C gehaltenen Maximaltemperatur abläuft.

4. Verfahren zur Herstellung von feinpulvrigen Metalloxiden mit festgelegter und eingestellter Reaktivität nach einem der Ansprüche 1 bis 3, dadurch gekennzeichnet, daß der Calcinierungsschritt bei einer im allgemeinen zwischen 260 °C und 600 °C und vorzugsweise zwischen 300 °C und 550 °C gehaltenen Maximaltemperatur stattfindet.

5. Verfahren zur Herstellung von feinpulvrigen Metalloxiden mit festgelegter und eingestellter Reaktivität nach einem der Ansprüche 1 bis 4, dadurch gekennzeichnet, daß der Schritt der Dehydratation unter reduziertem Druck abläuft.

6. Verfahren zur Herstellung von feinpulvrigen Metalloxiden mit festgelegter und eingestellter Reaktivität nach einem der Ansprüche 1 bis 4, dadurch gekennzeichnet, daß der Schritt der Dehydratisierung bei einem Druck von mindestens 0,1 MPa (1 bar) durchgeführt wird.

7. Verfahren zur Herstellung von feinpulvrigen Metalloxiden mit festgelegter und eingestellter Reaktivität nach einem der Ansprüche 1 bis 6, dadurch gekennzeichnet, daß der Calcinierungsschritt unter einem kontrollierten Wasserdampfdruck von höchstens 0,1 MPa (1 bar) abläuft.

8. Verfahren zur Herstellung von feinpulvrigen Metalloxiden mit festgelegter und eingestellter Reaktivität nach einem der Ansprüche 1 bis 7, dadurch gekennzeichnet, daß der Calcinierungsschritt unter einem kontrollierten Wasserdampfdruck von höchstens 10 kPa (75 mmHg) abläuft, wobei ein denitriertes Produkt mit einer spezifischen Oberfläche von mindestens 15 $m^2$/g erhalten wird.

9. Verfahren zur Herstellung von feinpulvrigen Metalloxiden mit festgelegter und eingestellter Reaktivität nach einem der Ansprüche 1 bis 7, dadurch gekennzeichnet, daß der Calcinierungsschritt unter einem kontrollierten Wasserdampfdruck von maximal 27 kPa (200 mmHg) abläuft, wobei ein denitriertes Produkt mit einer spezifischen Oberfläche von mindestens 5 $m^2$/g erhalten wird.

10. Verfahren zur Herstellung von feinpulvrigen Metalloxiden mit festgelegter und eingestellter Reaktivität nach einem der Ansprüche 1 bis 7, dadurch gekennzeichnet, daß der Calcinierungsschritt vorzugsweise unter einem kontrollierten Wasserdampfdruck von mindestens 15 kPa (110 mmHg) durchgeführt wird, wobei für den Fall, daß nur Uran vorliegt, ein denitriertes Produkt mit einer spezifischen Oberfläche von maximal 5 $m^2$/g erhalten wird.

11. Verfahren zur Herstellung von feinpulvrigen Metalloxiden mit festgelegter und eingestellter Reaktivität nach einem der Ansprüche 1 bis 7, dadurch gekennzeichnet, daß der Calcinierungsschritt unter einem kontrollierten Wasserdampfdruck zwischen 4,7 und 27 kPa (35 und 200 mmHg) abläuft, wobei für den Fall, daß nur Uran vorliegt, ein denitriertes Produkt mit einer spezifischen Oberfläche zwischen 5 $m^2$/g und 15 $m^2$/g erhalten wird.

12. Verfahren zur Herstellung von feinpulvrigen Metalloxiden mit festgelegter und eingestellter Reaktivität nach einem der Ansprüche 1 bis 11, dadurch gekennzeichnet, daß der Calcinierungsschritt unter einem Gesamtdruck durchgeführt wird, der über dem Atmosphärendruck liegt.

13. Verfahren zur Herstellung von feinpulvrigen Metalloxiden mit festgelegter und eingestellter Reaktivität nach einem der Ansprüche 1 bis 11, dadurch gekennzeichnet, daß der Calcinierungsschritt unter einem Gesamtdruck durchgeführt wird, der über dem Atmosphärendruck liegt.

FIG. 1